(19) Europäisches Patentamt
European Patent Office
Office européen des brevets

(11) Publication number : **0 072 173**
**B1**

(12) **EUROPEAN PATENT SPECIFICATION**

(45) Date of publication of patent specification : **07.11.84**

(21) Application number : **82304074.6**

(22) Date of filing : **02.08.82**

(51) Int. Cl.[3] : **C 09 J 3/00**, C 09 J 3/16, C 08 G 77/04, C 07 F 7/02, C 08 K 5/54

(54) **Novel complexes, coating and adhesive compositions, and methods.**

(30) Priority : **06.08.81 JP 123551/81**

(43) Date of publication of application : **16.02.83 Bulletin 83/07**

(45) Publication of the grant of the patent : **07.11.84 Bulletin 84/45**

(84) Designated contracting states : **DE FR GB IT SE**

(56) References cited :
**DE-A- 1 543 080**
**GB-A- 738 693**
**GB-A- 916 508**
**US-A- 3 153 006**
**US-A- 3 418 094**
**US-A- 3 983 055**

(73) Proprietor : **MINNESOTA MINING AND MANUFACTURING COMPANY**
**3M Center, P.O. Box 33427**
**St. Paul, MN 55133 (US)**

(72) Inventor : **Nozu, Hideo**
**3-8-8 Minami-Hashimoto**
**Sagamihara City (JP)**
Inventor : **Jobo, Takeo**
**3-8-8 Minami-Hashimoto**
**Sagamihara City (JP)**
Inventor : **Masuzaki, Hisao**
**3-8-8 Minami-Hashimoto**
**Sagamihara City (JP)**

(74) Representative : **Baillie, Iain Cameron et al**
**c/o Ladas & Parry Isartorplatz 5**
**D-8000 München 2 (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 072 173 B1

**Description**

## Background of the Invention

The present invention relates to a complex which is the reaction product of a metal salt, an organo-functional silane, and water. This invention further relates to compositions which exhibit improved adhesion to substrates in the presence of water or water vapor as the result of inclusion therein of either a metal salt and an organo-functional silane or a complex which is the reaction product of a metal salt, an organo-functional silane and water. Methods of reducing the adhesion loss suffered by compositions when exposed to water or water vapor are also discussed.

It is known that coating and adhesive compositions, once, cured, may suffer from adhesion loss when exposed to water or water vapor. While numerous adhesion promoters such as amino-functional trialkoxysilanes have been employed in compositions to improve their adhesion to, for example, metal substrates, conventional adhesion promoters often do not suitably decrease the adhesion loss suffered by compositions when exposed to water or water vapor.

Complexes of a metal salt and an amino-functional silane are known in the art to be useful antistatic agents, e. g., see U.S. Patent No. 3,418,094. However, it has not heretobefore been proposed to employ complexes of a metal salt and an organo-functional silane in coating or adhesive compositions in order to reduce the adhesion loss suffered by such compositions when exposed to water or water vapor.

## Summary of the Present Invention

The present invention provides novel complexes which are the reaction products of a metal salt, an organo-functional silane, and water, which complexes are useful in reducing the adhesion loss typically suffered by coating and adhesive compositions when exposed to water or water vapor. The present invention also provides novel coating and adhesive compositions which comprise complexes which are the reaction product of a metal salt, an organo-functional silane, and water. The present invention further provides novel methods for reducing the adhesion loss suffered by coating and adhesive compositions when exposed to water or water vapor. More particularly, the complexes which reduce adhesion loss exhibited by coating and adhesive compositions in the presence of water or water vapor are the reaction product of a metal salt, a silane of the formula

$$Y{-}Si(X)_3$$

wherein

X is selected from the group consisting of

i) radicals of the formula $-OR_1$, $R_1$ being a monovalent hydrocarbon group of 1 to 10 carbons ;

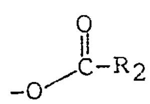,

ii) radicals of the formula

$R_2$ being selected from the group consisting of hydrogen and monovalent hydrocarbon groups of 1 to 10 carbons ; and

iii) halogen atom radicals ;

and may be the same or different in the same silane ; and

Y is selected from the group consisting of unsubstituted and substituted hydrocarbon groups of 1 to 10 carbons ;

and water.

The present invention also provides coating and adhesive compositions which exhibit improved resistance to adhesion loss as the result of inclusion therein of a metal salt and a silane as separate components.

The present invention provides a diverse group of coating and adhesive compositions which exhibit improved resistance to adhesion loss which generally results from exposure of the composition to water or water vapor. For example, epoxy, urethane, unsaturated and saturated polyesters, polyacrylate, nitrile-phenolic and polyvinylchloride compositions exhibiting improved adhesion are all described herein. The coating and adhesive compositions may be one-part or two-part compositions.

The coating and adhesive compositions described herein exhibit improved resistance to adhesion loss when employed on a variety of metal substrates (e. g., steel and aluminum).

## Detailed Description of the Invention

The complexes useful in the practice of the present invention are the reaction product of a metal salt, a silane of the formula

$$Y—Si(X)_3$$

wherein

X is selected from the group consisting of

i) radicals of the formula $—OR_1$, $R_1$ being a monovalent hydrocarbon group of 1 to 10 carbons ;

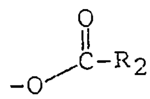

ii) radicals of the formula

$R^2$ being selected from the group consisting of hydrogen and monovalent hydrocarbon groups of 1 to 10 carbons ; and

iii) halogen atom radicals ;

and may be the same or different in the same silane ; and

Y is selected from the group consisting of unsubstituted or substituted hydrocarbon groups of 1 to 10 carbons ;

and water.

The metal salts useful in the practice of the present invention may comprise as cations the metals disclosed in U.S. Patent No. 3,418,094. Preferred metals for use in preparing the metal salt are titanium, manganese, copper, zinc, magnesium, aluminum and bismuth. The most preferred metal is iron.

The metal salts may comprise any anion which results in a water soluble complex. Suitable metal salts include metal chlorides, bromides, iodides, nitrites, sulfites and perchlorates. Preferred metal salts are metal nitrates, metal basic diacetates and metal ammonium dioxalates. The most preferred metal salts are metal chlorides.

Examples of suitable metal salts are $Fe(OH)(O_2CCH_3)_2$, $Fe(NH_4)_3(O_4C_2)_3$, $Fe(NO_3)_3$, $FePO_4$, $MgCl_2$, $AlCl_3$, $BiCl_3$, $TiCl_3$, $MnCl_2$, $FeCl_2$, $CoCl_2$, and $ZnCl_2$. The preferred metal salt in the practice of the present invention is $FeCl_3$.

The silanes useful in the practice of the present invention are of the above-indicated formula.

As indicated above, X may be a variety of types of radicals. While not wishing to be bound to any particular theory, it is believed that the only restriction on the type of radical which X may be is that X sould be hydrolyzable under reaction conditions such as those described hereinbelow. Preferred silanes in the practice of the present invention comprise, as X, methoxy, ethoxy, acetoxy and/or chloro radicals. Preferred silanes in the practice of the present invention comprise only one type of radical within a given silane.

The nature of Y is not believed to be critical to the practice of the present invention. Thus, Y may be an unsaturated or saturated hydrocarbon group which may or may not be substituted. Examples of suitable substituted hydrocarbon groups include methacryloxy-functional, epoxy-functional, mercapto-functional, amino-functional, and ureido-functional hydrocarbon groups.

Particular examples of suitable silanes are simple alkyl-functional silanes such as ethyl triethoxy silane; vinyl-functional silanes such as vinyl triethoxysilane, vinyl trichlorosilane, vinyl-tris(beta-methoxyethoxy) silane and vinyl triacetoxysilane (e. g., those commercially available under the trade designations « A-151 », « A-150 », « A-172 » and « A-188 », respectively, from Union Carbide Corporation) ; gamma-methacryloxypropyltrimethoxysilane (e. g., that commercially available under the trade designation « A-174 » from Union Carbide Corporation) ; epoxy-functional silanes such as gamma-glycidoxypropyltrimethoxysilane and beta-(3,4-epoxy-cyclohexyl)ethyltrimethoxysilane (e. g., those commercially available under the trade designations « A-187 » and « A-186 », respectively, from Union Carbide Corporation) ; mercapto-functional silanes such as gamma-mercapto-propyl-triethoxysilane (e. g., that available under the trade designation « A-189 » from Union Carbide Corporation) ; amino-functional silanes such as gamma-aminopropyltriethoxysilane, N-beta-(aminoethyl)gamma-aminopropyltrimethoxysilane, N-bis(beta-hydroxyethyl)gamma-amino-propyltriethoxysilane, and $H_2NCH_2CH_2NHCH_2CH_2NHCH_2CH_2CH_2Si(OCH_3)_3$ (e. g., those commercially available under the trade designations « A-1100 », « A-1120 », « A-1111 -, and « A-1130 », respectively, from Union Carbide Corporation) ; and ureido-functional silanes such as $H_2N—\overset{\overset{O}{\|}}{C}—NHC_3H_6Si(OCH_2CH_3)_3$ (e. g., that commercially available under the trade designation « A-1160 » from Union Carbide Corporation).

The complexes are generally prepared by adding water dropwise to a heated mixture which comprises a metal salt, a silane and a suitable solvent such as tetrahydrofuran, dimethylformamide or acetone. A base such as sodium hydroxide may also be added to the mixture in some instances to neutralize excess acidity.

It has been found in the present invention that varying the relative amounts of the metal salt, the silane and the water employed to prepare the complexes described herein can significantly affect the properties of the product thereby obtained. In particular, it has been found that suitable complexes may be prepared using from about 0.25 to 2 moles of the metal salt for every mole of the silane employed. As to

the amount of water employed, it is believed that complete or nearly complete hydrolysis of the silane group of the silane results in complexes exhibiting superior properties. Preferably about 2 to 6 moles of water and most preferably 3 to 4 moles of water will be employed for every mole of the silane employed. While the hydrated metal salt may be employed in preparing the complex, it is preferred that the anhydrous metal salt be employed.

A variety of types of chemically-curing coating and adhesive compositions (i. e., those requiring the presence of a curative for cure) exhibit improved adhesion to substrates in the presence of water or water vapor as the result of inclusion of the complexes in those compositions. For example, one-part and two-part coating and adhesive compositions comprising an epoxide, urethane, or unsaturated polyester as the curable organic resin compound all exhibit improved resistance to adhesion loss when they further comprise a complex of the type described hereinabove.

One-part and two-part epoxy coating and adhesive compositions in which the complexes are useful in improving adhesion to substrates are well-known in the art and comprise the many types of epoxy resins and curatives which have been described in the art. Examples of particular types of epoxy compositions in which these complexes may be suitably employed are described in U.S. Patent Nos. 2,847,395, 3,386,955 and 3,553,166. Preferred curatives for epoxy coating and adhesive compositions are conventional dihydrazide curatives.

One-part and two-part urethane coating and adhesive compositions in which these complexes may be suitably employed are also well-known in the art and include those described in U.S. Patent Nos. 3,272,098 and 3,723,163.

Suitable unsaturated polyester-containing coating and adhesive compositions in which these complexes may be employed are well-known in the art and include those described, for example, on pages 286-293 of « Preparative Methods of Polymer Chemistry », authored by W. R. Sorenson and T. W. Campbell and published by Interscience Publication, New York (1961).

The complexes described hereinabove are also useful in improving the adhesion of nonchemically-curing coating compositions (i. e., those not requiring the presence of a curative for cure, but which form a coating, for example, upon evaporation of a solvent). Examples of suitable organic resin compounds for employment in such coatings are well-known in the art and include, for example, such resins as vinyl polymers and copolymers, polyurethanes, synthetic elastomers, alkyd resins, polyacrylates, polymethacrylates and nitrile-phenolics. Other suitable organic resin compounds for use in nonchemically curing coating compositions are disclosed in U.S. Patent No. 3,418,094 (Marsden et al.).

The chemically-curing and nonchemically-curing coating and adhesive compositions described hereinabove preferably comprise about 0.2 to 5 parts by weight and most preferably 0.5 to 2 parts by weight of the complexes per 100 parts by weight of the total amount of the organic resin compound employed.

While it is preferred that the preformed complex which is the reaction product of a metal salt, a silane, and water be added to a coating or adhesive composition, it has been found in the present invention that coating and adhesive compositions (such as those described herein) to which the metal salt and silane have been added as separate components also exhibit improved resistance to the adhesion loss wich generally results from exposure to water or water vapor. Preferably the metal salt and silane are each added to a coating or adhesive composition in the amount of about 0.1 to 8 parts by weight per 100 parts by weight of the total amount of the organic resin compound present in the composition. The metal salt employed may either be anhydrous of hydrated.

The following non-limiting examples will illustrate the practice of the invention. Unless otherwise indicated, all parts, proportions and percentages are by weight.

Example 1

A suitable composition formed by the reaction of ferric chloride with an alkyl-functional silane was prepared as follows.

To a 500 millimeter, 2-neck round bottom flask equipped with a magnetic stirrer and a reflux condenser was added 200 grams of anhydrous tetrahydrofuran and 13 grams (0.08 moles) of $FeCl_3$ dissolved completely and thereupon 16 grams (0.08 moles) of « A-15 » (ethyl triethoxysilane, commercially available from Union Carbide) was added to the solution, also with stirring. The resulting solution was refluxed by heating to about 67 °C. While the solution was refluxing, a mixture of 4.5 grams (0.25 moles) of water and 10 grams of tetrahydrofuran was added dropwise over a 15 minute period with constant stirring of the solution. The solution was heated under reflux at 67 °C for one hour. Thereafter the solvent was removed by means of vacuum roto-evaporation to yield a reddish-brown viscous liquid.

Example 2

A suitable complex formed by the reaction of ferrous chloride with a vinyl-functional silane was prepared as follows :

To a round bottom flask of the type described in Example 1 and similarly equiped was added 75 grams of anhydrous tetrahydrofuran and 5 grams (0.04 moles) of $FeCl_2$. The mixture was stirred until

the $FeCl_2$ dissolved completely and thereupon 15 grams (0.08 moles) of « A-151 » (vinyl triethoxysilane, commercialy available from Union Carbide) was added to the solution, also with stirring. A mixture of 2.1 grams (0.12 moles) of water and 10 grams of tetrahydrofuran was added dropwise to the above solution which was then refluxed by heating to about 67 °C. The solution was refluxed for 1 hour with constant stirring. Thereafter, solvent was removed from the solution by means of vacuum roto-evaporation to yield a reddish-brown, viscous liquid which transformed into a brittle resinous material upon contact with moisture.

Example 3

A suitable complex formed by the reaction of ferric chloride with an epoxy-functional silane was prepared as follows :

To a round bottom flask of the type described in Example 1 and similarly equipped was added 200 grams of anhydrous dimethyl formamide and 10 grams (0.062 moles) of $FeCl_3$. The mixture was stirred until the $FeCl_3$ dissolved completely and thereupon 14.6 grams (0.062 moles) of « A-187 » (gamma-glycidoxypropyltrimethoxysilane, commercially available from Union Carbide Corporation) was added to the resulting solution, also with stirring. The resulting solution was heated to about 70 °C. A mixture of 2.2 grams of water (0.12 moles) and 10 grams of dimethyl formamide was then added dropwise with constant stirring of the solution. Heating of the solution was continued for an additional two hours after the water-dimethyl formamide mixture had been added. Thereafter, solvent was removed from the solution by means of vacuum roto-evaporation to yield a reddish-brown liquid which transformed into a dark-reddish-brown, brittle resinous material upon drying overnight in a vacuum oven maintained at 50 °C.

Example 4

A suitable complex formed by the reaction of ferric chloride with a mercapto-functional silane was prepared as follows :

To a round bottom flask of the type described in Example 1 and similarly equipped was added 75 grams of anhydrous tetrahydrofuran and 6.5 grams (0.04 moles) of $FeCl_3$. The mixture was stirred until the $FeCl_3$ dissolved completely and thereupon 15.7 grams (0.08 moles) of « A-189 » (gamma-mercaptopropyl-triethoxysilane, commercially available from Union Carbide Corporation) was added to the solution, also with stirring. A mixture of 2.1 grams (0.12 moles) of water and 10 grams of tetrahydrofuran was added dropwise to the above solution which was then refluxed by heating to about 67 °C. The solution was refluxed for 1 hour with constant stirring. Thereafter, solvent is removed from the solution by means of vacuum roto-evaporation to yield a liquid.

Example 5

A suitable complex formed by the reaction of ferric chloride with an amino-functional silane was prepared as follows :

To a round bottom flask of the type described in Example 1 and similarly equipped was added 200 grams of anhydrous tetrahydrofuran and 10 grams (0.062 moles) of $FeCl_3$. The mixture was stirred until the $FeCl_3$ dissolved completely and thereupon 13.6 grams (0.062 moles) of « A-1120 » (N-(beta-aminoethyl)-gamma-aminopropyl triethoxysilane, commercially available from Union Cabide Corporation) was added to the solution, also with stirring. The resulting solution was refluxed by heating to about 67 °C. While solution was refluxing, a mixture of 5 grams (0.28 moles) of water and 20 grams of tetrahydrofuran was added dropwise over a 15 minute period with constant stirring of the solution. Subsequently, the resulting precipitate was filtered, washed with tetrahydrofuran, and air-dried.

Example 6

Suitable one-part epoxy compositions comprising the complexes of Examples 1 to 5 above were prepared from the following Premixes A and B :

Premix A

| | Parts by Weight |
|---|---|
| « Epon 828 » (a diglycidyl ether of Bisphenol A, commercially available from Shell Chemical Company) | 25 |
| Sebacic dihydrazide (a curative, commercially available from Olin Chemical Corporation) | 25 |

(See Premix B, page 6)

Premix B

| | Parts by Weight |
|---|---|
| « Epon 828 » | 100 |
| « Hycar 1312 (an acrylonitrile polymer, commercially available from B. F. Goodrich ; added to provide flexibility | 19 |
| « Cab-O-Sil M-5 » (a fumed silica, commercially available from Cabot Corporation) | 5 |
| Carbon black | 1.2 |
| Complex | 1 |

In preparing Premix A, the sebacic dihydrazide and « Epon 828 » were combined and the resulting mixture was passed three-times through a paint mill. In preparing Premix B, the « Epon 828 » and « Hycar 1312 » were mixed together with heating to 65 °C until a uniform mixture was obtained. The mixture was cooled to about 40 °C and the « Cab-O-Sil M-5 », carbon black and complex were thereafter added. The resulting mixture was mixed until uniform. A one-part epoxy composition was obtained by mixing 50 parts by weight of Premix A and 150.2 parts by weight of Premix B at room temperature until a uniform mixture was obtained and that mixture was thereupon passed through a paint mill three-times.

In testing the performance of each epoxy composition, a 125 ± 10 micrometer coating of a composition was applied to a 20-gauge, 10 cm × 20 cm cold rolled steel panel by means of a Meyer bar. The steel panel had previously been wiped with methyl ethyl ketone. Each coated panel was thereafter cured at 177 °C for 45 minutes and then allowed to condition overnight at room temperature.

Subsequently, each coated panel was immersed in a water bath maintained at 75 °C. The coated panels were periodically removed from the bath and subjected to testing in accordance with the ASTM Methods Test entitled « Measuring Adhesion by Tape Test » (Designation : D-3359-74). The time to one hundred percent loss of adhesion was determined.

Results of the testing of the various foregoing compositions appear in Table 1 below. Results are also included for epoxy compositions prepared as described above except that the respective silane itself has been substituted for a given complex (i. e., 1 part by weight of the respective silane has been substituted for the complex of Premix B) and for an epoxy composition not containing any additive. All results appearing in Table 1 below and in the other Examples represent averages of generally at least 5 independent determinations and have been normalized for a control having 100 % failure at 1 hour.

Table 1

| Additive | Time to 100 % failure (hours) |
|---|---|
| Complex of Example 1 (i. e., reaction product of $FeCl_3$ and ethyl triethoxysilane) | 4.5 |
| Ethyl triethoxysilane | 2 |
| Complex of Example 2 (i. e., reaction product of $FeCl_2$ and vinyl triethoxysilane) | 57 |
| Vinyltriethoxysilane | 3 |
| Complex of Example 3 (i. e., reaction product of $FeCl_3$ and gamma-glycidoxypropyltrimethoxysilane) | 5 |
| gamma-glycidoxypropyltrimethoxysilane | 1.5 |
| Complex of Example 4 (i. e., reaction product of $FeCl_3$ and gamma-mercaptopropyl triethoxysilane) | 56 |
| gamma-mercaptopropyl triethoxysilane | 1 |
| Complex of Example 5 (i. e., reaction product of $FeCl_3$ and N-beta-aminoethyl)-gamma-aminopropyl triethoxysilane) | 18 |
| N-beta-(aminoethyl)-gamma-aminopropyl triethoxysilane | 2.5 |
| None (control) | 1 |

Example 7

Suitable complexes formed by the reaction of various metal salts (i. e., $FeCl_3$, $Fe(OH)(O_2CCH_3)_2$, $Fe(NH_4)_3(O_4C_2)_3$, $Fe(NO_3)_3$, $AlCl_3$, $BiCl_3$, $TiCl_3$, $MnCl_2$, $FeCl_2$, $CuCl_2$, and $ZnCl_2$) with an amino-functional silane were prepared as follows :

To a 500 milliliter 2-neck round bottom flask of the type described in Example 1 and similarly equipped was added 200 grams of tetrahydrofuran and 0.06 moles of a given metal salt. The mixture was stirred until the metal salt dissolved completely and thereupon 13.6 grams (0.06 moles) of « A-1100 »

(gamma-aminopropyl triethoxysilane, commercially available from Union Carbide Corporation) was added to the solution, also with stirring. The resulting solution was refluxed by heating to about 67 °C. While the solution was refluxing, a mixture of 2.1 grams (0.12 moles) of water and 10 grams of tetrahydrofuran were added dropwise over a 15 minute period with constant stirring of the solution. Subsequently, the resulting precipitate was filtered, washed successively with tetrahydrofuran and ether, and air-dried.

### Example 8

Suitable one-part epoxy compositions comprising the complexes of Example 7 above were prepared from premixes which were the same as Premixes A and B of Example 6 except for the substitution of the complexes of Example 7 for those of Examples 1 to 5. The premixes were employed in the same relative amounts as in Example 6 in preparing the epoxy compositions of this example.

The epoxy compositions of this example was tested in accordance with the procedures described in Example 6. Results of this testing appear in Table 2 below. An epoxy composition not containing any complex failed 100 % after only 1 hour.

Table 2

| Metal Salt Employed in Preparing Complex | Time to 100 % Failure (hours) |
|---|---|
| $FeCl_3$ | 9 |
| $Fe(OH)(O_2CCH_3)_2$ | 6 |
| $Fe(NH_4)_3(O_4C_2)_3$ | 11 |
| $Fe(NO_3)_3$ | 4 |
| $AlCl_3$ | 2 |
| $BiCl_3$ | 2 |
| $TiCl_3$ | 9 |
| $MnCl_2$ | 4 |
| $FeCl_2$ | 7 |
| $CuCl_2$ | 10 |
| $ZnCl_2$ | 4 |

### Example 9

A suitable complex formed by the reaction of ferric chloride with an amino-functional silane was prepared as follows :

To a round bottom flask of the type described in Example 1 and similarly equipped was added 200 grams of anhydrous tetrahydrofuran and 10 grams (0.06 moles) of $FeCl_3$. The mixture was stirred until the $FeCl_3$ dissolved completely and thereupon 13.6 moles) of « A-1100 » (gamma-aminopropyl triethoxysilane commercially available from Union Carbide Corporation) was added to the solution, also with stirring. The resulting solution was refluxed by heating to about 67 °C. While the solution was refluxing, a mixture of 5 grams (0.28 moles) of water and 20 grams of tetrahydrofuran was added dropwise over a 15 minute period with constant stirring of the solution. Subsequently, the resulting precipitate was filtered, washed successively with tetrahydrofuran and ether, and air-dried.

### Example 10

A suitable one-part, moisture-curing urethane composition comprising the complex of Example 9 was prepared using the following ingredients :

| | Parts by Weight |
|---|---|
| « EC-5790 » (an isocyanate capped urethane prepolymer, commercially available from 3M) | 100 |
| Complex of Example 9 | 0.4 |

The urethane composition of this Example was prepared by mixing the « EC-5790 » and the complex of Example 9 until a uniform mixture was obtained and by then passing the mixture through a paint mill three-times.

The urethane composition of this Example was tested in accordance with the procedures described in Example 6 except that here a 150 to 175 micrometer thick coating of the composition was employed and the coating was allowed to dry at room temperature for 3 days and was thereafter cured at 82 °C for 30 minutes. One hundred percent failure did not occur until after about 60 minutes. A urethane

composition containing only the » EC-5790 » and no complex exhibited 100 % failure within only about 10 minutes.

Example 11

Suitable compositions comprising the complex of Example 9 were prepared using the following ingredients :

| | Parts by Weight |
|---|---|
| « Upica 8701 » (an isophthalic acid-based polyester, commercially available from Nippon Upica Company) | 100 |
| « Fibrene C-400 » (talc, commercially available from Cyprus Industrial Mineral Company) | 100 |
| Dimethylaniline | 0.5 |
| Complex of Example 9 | 1, 2 or 4 |
| « Lucidol 50 » (benzoyl peroxide in butyl benzyl phthalate, commercially available from Pennwalt Corporation) | 2 |

In preparing the compositions of this Example, the « Upica 8701 » and complex were mixed together until a uniform mixture was obtained which was then passed two-times through a paint mill. The « Fibrene C-400 » and dimethyl aniline were thereafter added and the resulting mixture was mixed until uniform and then passed through a paint mill three-times. The « Lucidol 50 » was added with mixing to the above mixture just prior to testing.

In testing the performance of the compositions of this Example, 130 ± 10 micrometer coatings of the compositions were applied to 0.8 millimeter thick, 10 cm × 30 cm cold rolled steel panels by means of a Meyer Bar. The steel panels had previously been wiped with methyl ethyl ketone. The coated panels were thereafter cured at room temperature for 24 hours.

Subsequently, the coated panels were immersed in a water bath maintained at 50 °C. The coated panels were periodically removed from the bath and subjected to testing in accordance with ASTM Standard Methods Test entitled « Bendability of Pipeline Coatings » (Designation : G-10).

Results of the testing of the compositions of this Example appear in Table 3 below. Results are also included for a composition not containing any complex.

Table 3

| Amount of Complex Added (parts by weight) | Time to Failure (minutes) |
|---|---|
| 1 | 90 |
| 2 | 90 |
| 4 | 190 |
| 0 | 15 |

Example 12

A suitable complex formed by the reaction of $FeCl_3$ with an amino-functional silane was prepared as follows :

To a 500 milliliter 3-neck round bottom flask of the type described in Example 1 and similarly equipped was added 200 grams of anhydrous tetrahydrofuran and 10 grams (0.06 moles) of $FeCl_3$. The mixture was stirred until the $FeCl_3$ dissolved completely and thereupon 13.6 grams (0.06 moles) of « A-1100 » (gamma-aminopropyl triethoxysilane, commercially available from Union Carbide Corporation) was added, also with stirring. The resulting solution was refluxed by heating to about 67 °C with constant stirring and a mixture of 7.4 grams of NaOH, 6.7 grams (0.37 moles) of water and 20 grams of anhydrous ethanol was added dropwise over a 15 minute period, also with constant stirring. The resulting precipitate is filtered, successively washed with 10 milliliters each of tetrahydrofuran and diethyl ether, and air-dried to yield 21.5 grams of a brown, fine powder. Further purification is achieved by extracting the precipitate with a solution comprising 100 grams of $H_2O$, 10 grams of methanol and 300 grams of acetone. The precipitate was then filtered, washed with the above solution, and air-dried.

Example 13

A suitable composition comprising the complex of Example 12 is prepared using the following ingredients :

| | Parts by Weight |
|---|---|
| 30 % VMCC resin in a 50 : 50 (weight : weight) toluene/acetone mixture (a polyvinylchloride resin, commercially available from Union Carbide) | 100 |
| Complex of Example 12 | 0.5 |

The composition of this Example was prepared by mixing the two ingredients until a uniform mixture was obtained.

The composition of this Example was tested in accordance with the procedures described in Example 6 except that here a 125 ± 10 micrometer coating was employed and the coated panels were dried at room temperature. The composition of this Example did not fails 100 % until after about 5 hours whereas a composition non containing the complex exhibited 100 % failure after only 1 hour.

Example 14

A suitable composition comprising the complex of Example 2 is prepared using the following ingredients :

| | Parts by Weight |
|---|---|
| « Alon S-1001 » (an acrylic resin, commercially available from Toha Gosei Company) | 100 |
| Complex of Example 2 | 2 |

The composition of this Example was prepared by mixing the two ingredients until a uniform mixture was obtained.

In testing the performance of the composition of this Example, the composition was applied to 10 cm × 20 cm cold rolled steel panels by means of a Meyer Bar to give coatings which were 80 ± 10 micrometers thick when dry. The steel panels had previously been wiped with methyl ethyl ketone. The coated panels were cured for 2 hours at room temperature.

Subsequently, the coated panels were immersed in a water bath maintained at 50 °C. The coated panels were then subjected to testing in accordance with ASTM Standard Methods Test entitled « Measuring Adhesion by Tape Test » (Designation : D3359-74). The composition of this Example did not fail 100 % until after about 68 hours whereas a composition not containing the complex exhibited 100 % failure after only 1 hour.

Example 15

In preparing suitable one-part epoxy compositions in accordance with the present invention, an epoxy composition was prepared from premixes similar to Premixes A and B of Example 6 except that, for the compositions of this Example, no complex was present in premix B. The premixes were employed in the same relative amounts as in Example 6. To the resulting one-part epoxy composition was added ferric chloride in an amount of 0.5 parts by weight per 100 parts by weight of the total amount of epoxy resin, and one of « A-151 » (vinyl triethoxysilane, available from Union Carbide Corporation), « A-189 » (gamma-mercaptopropyltriethoxysilane, avalable from Union Carbide Corporation) or « A-1100 » (gamma-aminopropyl-triethoxysilane, available from Union Carbide Corporation), the respective silane also being present in an amount of 0.5 parts by weight per 100 parts by weight of the total amount of epoxy resin. The ferric chloride and silane were added to the epoxy composition at room temperature. The resulting mixture was mixed until a uniform mixture was obtained, and that mixture was thereafter passed through a paint mill three times.

Each of the epoxy compositions of this Example were tested in accordance with the procedures of Example 6 except that here the coatings employed were 100 ± 10 micrometers in thickness. Results of the testing appear in Table 4 below. Results are also included for epoxy compositions prepared as described above except that, instead of employing the above-mentioned amounts of the ferric chloride and respective silane, the compositions contained no ferric chloride or silane or contained only one of ferric chloride, « A-151 », « A-189 », or « A-1100 » in an amount of 1 part by weight per 100 parts by weight of the total amount of epoxy resin.

(See Table 4, page 10)

Table 4

| Additive(s) | Time to 100 % Failure (hours) |
|---|---|
| $FeCl_3$ and « A-151 » | 27 |
| $FeCl_3$ and « A-189 » | 34 |
| $FeCl_3$ and « A-1100 » | 27 |
| $FeCl_3$ only | 8 |
| « A-151 » only | 1 |
| « A-189 » only | 1 |
| « A-1100 » only | 1 |
| None | 1 |

**Claims**

1. A complex which is the reaction product of a metal salt, a silane of the formula

$$Y—Si(X)_3$$

wherein

X is selected from the group consisting of

i) radicals of the formula $—OR_1$, $R_1$ being a monovalent hydrocarbon group of 1 to 10 carbons ;

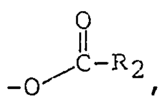

ii) radicals of the formula

$R_2$ being selected from the group consisting of hydrogen and monovalent hydrocarbon groups of 1 to 10 carbons ; and

iii) halogen atom radicals ;

and may be the same or different in the same silane ; and

Y is selected from the group consisting of unsubstituted hydrocarbon groups of 1 to 10 carbons and substituted non-amino-functional hydrocarbon groups of 1 to 10 carbons ;

and water.

2. A composition comprising

a) an organic resin compound, and

b) a metal salt and a silane of the formula

$$Y—Si(X)_3$$

wherein

X is selected from the group consisting of

i) radicals of the formula $—OR_1$, $R_1$ being a monovalent hydrocarbon group of 1 to 10 carbons ;

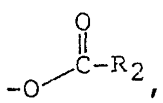

ii) radicals of the formula

$R_2$ being selected from the group consisting of hydrogen and monovalent hydrocarbon groups of 1 to 10 carbons ; and

iii) halogen atom radicals ;

and may be the same or different in the same silane ; and

Y is selected from the group consisting of unsubstituted and substituted hydrocarbon groups of 1 to 10 carbons ; or a complex which is the reaction product of said metal salt, said silane, excluding an amino-functional silane, and water, with the proviso that said silane employed in preparing said complex may be amino-functional when said organic resin is chemically-curing and said composition comprises a curative.

3. A composition in accordance with claim 2, wherein said organic resin is an epoxy resin and said composition comprises a curative for said epoxy resin.

4. A composition in accordance with claim 3, comprising said complex.

5. A composition in accordance with claim 4, wherein said complex is present in an amount of about 0.2 to 5 parts by weight per 100 parts of said organic resin.

6. A composition in accordance with claim 4 or 5, wherein said metal salt employed in preparing said complex is ferric chloride and said silane employed in preparing said complex is an amino-functional silane.

7. A method for reducing the adhesion loss of a coating or adhesive composition caused by water or water vapor, said method comprising adding to a coating or adhesive composition a metal salt and a silane of the formula

$$Y—Si(X)_3$$

wherein

X is selected from the group consisting of

i) radicals of the formula $—OR_1$, $R_1$ being a monovalent hydrocarbon group of 1 to 10 carbons ;

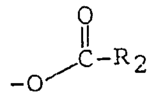 ,

ii) radicals of the formula

$R_2$ being selected from the group consisting of hydrogen and monovalent hydrocarbon groups of 1 to 10 carbons ; and

iii) halogen atom radicals ;

and may be the same or different in the same silane ; and

Y is selected from the group consisting of unsubstituted and substituted hydrocarbon groups of 1 to 10 carbons ; or

a complex which is the reaction product of said metal salt, said silane, and water.

## Ansprüche

1. Komplexverbindung, die das Reaktionsprodukt eines Metallsalzes, eines Silans der Formel

$$Y—Si(X)_3$$

ist, in der

X ausgewählt ist aus der Klasse, die besteht aus

i) Radikalen der Formel $—OR_1$, in der $R_1$ eine einwertige Kohlenwasserstoffgruppe mit 1 bis 10 Kohlenstoffatomen ist ;

ii) Radikalen der Formel

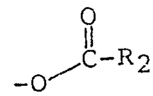 ,

in der $R_2$ ausgewählt ist aus der Klasse, die aus Wasserstoff und einwertigen Kohlenwasserstoffgruppen mit 1 bis 10 Kohlenstoffatomen besteht ; und

iii) Halogenatomradikalen ;

und in demselben Silan gleich oder verschieden sein kann, und

Y ausgewählt ist aus der Klasse, die aus nichtsubstituierten Kohlenwasserstoffgruppen mit 1 bis 10 Kohlenstoffatomen und substituierten nichtaminofunktionalen Kohlenwasserstoffgruppen mit 1 bis 10 Kohlenstoffatomen besteht ;

und Wasser.

2. Zusammensetzung, die enthält

a) eine organische Harzverbindung und

b) ein Metallsalz und ein Silan der Formel

$$Y—Si(X)_3$$

ist, in der

X ausgewählt ist aus der Klasse, die besteht aus

i) Radikalen der Formel $—OR_1$, in der $R_1$ eine einwertige Kohlenwasserstoffgruppe mit 1 bis 10 Kohlenstoffatomen ist ;

ii) Radikalen der Formel

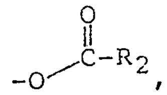

in der $R_2$ ausgewählt ist aus der Klasse, die aus Wasserstoff und einwertigen Kohlenwasserstoffgruppen mit 1 bis 10 Kohlenstoffatomen besteht ; und

iii) Halogenatomradikalen ;

und in demselben Silan gleich oder verschieden sein kann, und

Y ausgewählt ist aus der Klasse, die aus nichtsubstituierten Kohlenwasserstoffgruppen mit 1 bis 10 Kohlenstoffatomen besteht ; oder eine Komplexverbindung, die das Reaktionsprodukt des genannten Metallsalzes, des genannten Silans, mit Ausnahme von aminofunktionalem Silan, und Wasser ist, wobei das bei der Erzeugung der Komplexverbindung verwendete Silan aminofunktional sein kann, wenn das organische Harz chemisch härtbar ist und die Zusammensetzung ein Härtemittel enthält.

3. Zusammensetzung nach Anspruch 2, dadurch gekennzeichnet, daß das organische Harz ein Epoxidharz ist und die Zusammensetzung ein Härtemittel für das Epoxidharz enthält.

4. Zusammensetzung nach Anspruch 3, dadurch gekennzeichnet, daß sie die genannte Komplexverbindung enthält.

5. Zusammensetzung nach Anspruch 4, dadurch gekennzeichnet, daß die Komplexverbindung in einer Menge von etwa 0,2 bis 5 Gewichtsteilen pro 100 Teile des organischen Harzes vorhanden ist.

6. Zusammensetzung nach Anspruch 4 oder 5, dadurch gekennzeichnet, daß das zum Erzeugen der Komplexverbindung verwendete Metallsalz Eisen(III)-chlorid und das zum Erzeugen der Komplexverbindung verwendete Silan ein aminofunktionales Silan ist.

7. Verfahren zum Vermindern des Haftfestigkeitsverlustes einer Überzugs- oder Klebstoffmasse unter der Einwirkung von Wasser oder Wasserdampf, dadurch gekennzeichnet, daß einer Überzugs- oder Klebstoffmasse ein Metallsalz und ein Silan der Formel

$$Y—Si(X)_3$$

zugesetzt werden, in der

X ausgewählt ist aus der Klasse, die besteht aus

i) Radikalen der Formel $—OR_1$, in der $R_1$ eine einwertige Kohlenwasserstoffgruppe mit 1 bis 10 Kohlenstoffatomen ist,

ii) Radikalen der Formel

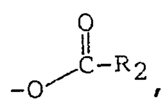

in der $R_2$ ausgewählt ist aus der Klasse, die aus Wasserstoff und einwertigen Kohlenwasserstoffgruppen mit 1 bis 10 Kohlenstoffatomen besteht ; und

iii) Halogenatomradikalen ;

und in demselben Silan gleich oder verschieden sein kann, und

Y ausgewählt ist aus der Klasse, die aus nichtsubstiuierten und substituierten Kohlenwasserstoffgruppen mit 1 bis 10 Kohlenstoffatomen besteht ; oder eine Komplexverbindung zugesetz wird, die das Reaktionsprodukt des genannten Metallsalzes, des genannten Silans und Wasser ist.

## Revendications

1. Complexe qui est le produit de réaction d'un sel métallique, d'un silane de formule

$$Y—Si(X)_3$$

dans laquelle

X est choisi dans le groupe comprenant

i) des radicaux de formule $—OR_1$, $R_1$ étant un groupe hydrocarboné monovalent de 1 à 10 atomes de carbone ;

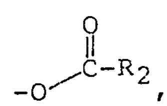

ii) des radicaux de formule

$R_2$ étant choisi dans le groupe comprenant l'hydrogène et des groupes hydrocarbonés monovalents de 1 à 10 atomes de carbone ; et

iii) des radicaux formés d'atomes d'halogènes ;

les groupes X pouvant être égaux ou différents dans le même silane ; et

Y est choisi entre des groupes hydrocarbonés insaturés de 1 à 10 atomes de carbone et des groupes hydrocarbonés substitués sans fonctionnalité amino, de 1 à 10 atomes de carbone ;

et d'eau.

2. Composition comprenant

a) un composé formé d'une résine organique, et

b) un sel de métal et un silane de formule

$$Y\text{—}Si(X)_3$$

dans laquelle

X est choisi dans le groupe comprenant :

i) des radicaux de formule $\text{—}OR_1$, $R_1$ étant un groupe hydrocarboné monovalent de 1 à 10 atomes de carbone ;

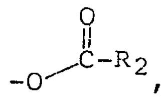

ii) des radicaux de formule

$R_2$ étant choisi dans le groupe comprenant l'hydrogène et des groupes hydrocarbonés monovalents de 1 à 10 atomes de carbone ; et

iii) des radicaux formés d'atomes d'halogènes ;

les groupes X pouvant être égaux ou différents dans le même silane ; et

Y est choisi dans le groupe comprenant des groupes hydrocarbonés non substitués et substitués de 1 à 10 atomes de carbone ; ou un complexe qui est le produit de réaction dudit sel métallique, dudit silane, à l'exception d'un silane à fonctionnalité amino, et d'eau, sous réserve que ledit silane utilisé dans la préparation dudit complexe puisse être porteur d'une fonctionnalité amino lorsque ladite résine organique subit une maturation chimique et ladite composition comprend un agent de maturation.

3. Composition suivant la revendication 2, dans laquelle la résine organique est une résine époxy et la composition comprend un agent de maturation pour ladite résine époxy.

4. Composition suivant la revendication 3, comprenant ledit complexe.

5. Composition suivant la revendication 4, dans laquelle ledit complexe est présent en une quantité d'environ 0,2 à 5 parties en poids pour 100 parties de ladite résine organique.

6. Composition suivant la revendication 4 ou 5, dans laquelle le sel métallique employé dans la préparation dudit complexe est le chlorure ferrique et ledit silane utilisé dans la préparation dudit complexe est un silane à fonctionnalité amino.

7. Procédé pour réduire la perte d'adhérence d'un revêtement ou d'une composition adhésive sous l'effet de l'eau ou de la vapeur d'eau, ledit procédé consistant à ajouter à un revêtement ou à une composition adhésive un sel de métal et un silane de formule

$$Y\text{—}Si(X)_3$$

dans laquelle

X est choisi dans le groupe comprenant :

i) des radicaux de formule $\text{—}OR_1$, $R_1$ étant un groupe hydrocarboné monovalent de 1 à 10 atomes de carbone ;

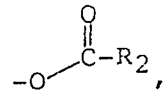

ii) des radicaux de formule

$R_2$ étant choisi dans le groupe comprenant l'hydrogène et des groupes hydrocarbonés monovalents de 1 à 10 atomes de carbone ; et

iii) des radicaux formés d'atomes d'halogènes ;

les groupes X pouvant être égaux ou différents dans le même silane ; et

Y est choisi entre des groupes hydrocarbonés non substitués et substitués ayant 1 à 10 atomes de carbone ; ou un complexe qui est le produit de réaction dudit sel métallique, dudit silane et d'eau.